# EUROPÄISCHE PATENTSCHRIFT

(11) **EP 3 084 368 B1**
(45) Veröffentlichungstag und Bekanntmachung des Hinweises auf die Patenterteilung: **04.03.2020**
(21) Anmeldenummer: 14793550.6
(22) Anmeldetag: 04.11.2014
(51) Int. Cl.: G01F 15/18, G01F 1/34, G01L 15/00, G01L 19/00

(54) **LUFTMASSENMESSVORRICHTUNG UND LUFTMASSENMESSSYSTEM**
AIR MASS FLOW MEASUREMENT DEVICE AND SYSTEM
DISPOSITIF ET SYSTÈME DE MESURE DE DÉBIT D'AIR

(30) Priorität: 17.12.2013 DE 102013226138
(43) Veröffentlichungstag der Anmeldung: 26.10.2016
(73) Patentinhaber: Robert Bosch GmbH, 70442 Stuttgart (DE)
(72) Erfinder: SCHNEIDER, Norbert, 75233 Tiefenbronn (DE); HORSTBRINK, Michael, 70469 Stuttgart-Feuerbach (DE); RITTMANN, Michael, 71254 Ditzingen (DE)
(86) Internationale Anmeldenummer: PCT/EP2014/073693
(87) Internationale Veröffentlichungsnummer: WO 2015/090712

(56) Entgegenhaltungen:
- EP-A1- 2 525 197
- EP-A2- 2 657 669
- WO-A1-2007/031516
- WO-A2-01/66957
- DE-A1-102004 040 924
- DE-A1-102012 215 235
- US-A1- 2004 250 610
- US-A1- 2008 264 181

## Beschreibung

### Stand der Technik

Die vorliegende Erfindung bezieht sich auf eine Luftmassenmessvorrichtung für ein Fahrzeug, sowie auf ein Luftmassenmesssystem.

Die Luftmassenmessung ist bei Benzin- und Dieselmotoren etabliert. Sie dient zur Regelung der Kraftstoff-Einspritzmenge und der Abgasrückführung.

Die WO 2007/031516 A1 befasst sich mit einem Druckmessumformer, der zur Verbesserung der Verfügbarkeit zusätzlich zu einem ersten Drucksensor mit einem zweiten Drucksensor ausgestattet ist. Ein Aufnehmer liefert ein erstes Messsignal des ersten Drucksensors sowie ein zweites Messsignal des zweiten Drucksensors an eine Auswerteeinrichtung. Die Auswerteeinrichtung ist ausgebildet, um einen Messwert durch eine Schnittstelle über ein Bussystem an ein Leitsystem weiterzugeben. Die Auswerteeinrichtung ist dazu ausgebildet, den Messwert im Normalbetrieb anhand des ersten Messsignals und bei einem festgestellten Defekt des ersten Drucksensors anhand des zweiten Messsignals zu ermitteln. Die US 2004/0250610 A1 befasst sich mit einem Antriebssystem, dass einen Luftflusssensor und zwei Drucksensoren umfasst. Die DE 10 2004 040 924 A1 befasst sich mit einer Vorrichtung zum Betrieb einer Wärmekraftmaschine.

Die DE 10 2012 215235 A1 befasst sich mit einem Sensorbauteil mit einem Gehäuse, in dem zumindest ein MEMS-Bauelement mit einer Drucksensorkomponente und eine Auswerteschaltung angeordnet sind, wobei das Gehäuse mindestens eine Medienzugangsöffnung für die Drucksensorkomponente aufweist. Die WO 01/66957 A2 befasst sich mit einem Durchflusssensor für einen hydraulischen Aktor. Die EP 2 657 669 A2 befasst sich mit einem Drucksensorsystem mit einem Drucksensorchip. Die US 2008/264181 A1 befasst sich mit einer Luftmassenmessvorrichtung mit zwei Drucksensoren, einer Auswerteeinrichtung, einem Luftmassensensor und einem Sensorträger.

### Offenbarung der Erfindung

Vor diesem Hintergrund werden mit der vorliegenden Erfindung eine Luftmassenmessvorrichtung für ein Fahrzeug, sowie ein Luftmassenmesssystem gemäß den Hauptansprüchen vorgestellt. Vorteilhafte Ausgestaltungen ergeben sich aus den jeweiligen Unteransprüchen und der nachfolgenden Beschreibung.

Unter Verwendung von zwei separaten Sensoren kann ein Druck sehr zuverlässig erfasst werden. Durch eine Anbindung der Sensoren über getrennte Schnittstellen an eine Auswerteeinrichtung kann eine sehr hohe Ausfallsicherheit des Gesamtsystems gewährleistet werden.

Eine Drucksensorvorrichtung für eine erfindungsgemäße Luftmassenmessvorrichtung für ein Fahrzeug weist die folgenden Merkmale auf:
ein Schaltungsträger;
einen ersten Drucksensor, der an dem Schaltungsträger angeordnet ist und ausgebildet ist, um einen Druck zu erfassen und ein den Druck repräsentierendes erstes Drucksignal bereitzustellen;
einen zweiten Drucksensor, der an dem Schaltungsträger angeordnet ist und ausgebildet ist, um den Druck zu erfassen und ein den Druck repräsentierendes zweites Drucksignal bereitzustellen; und
eine Auswerteeinrichtung, die an dem Schaltungsträger angeordnet ist und eine erste Eingangsschnittstelle zum Empfangen des ersten Drucksignals, eine zweite Eingangsschnittstelle zum Empfangen des zweiten Drucksignals und eine Ausgangsschnittstelle zum Ausgeben eines unter Verwendung des ersten Drucksignals und des zweiten Drucksignals bereitgestellten Ausgangssignals aufweist.

Eine Luftmassenmessvorrichtung kann beispielsweise zum Ermitteln einer einem Verbrennungsmotor eines Fahrzeugs zugeführten Luftmasse verwendet werden. Beispielsweise kann die Luftmassenmessvorrichtung als ein sogenannter Integrated Pressure- and Humidity Sensor ausgeführt sein. Entsprechend kann eine Drucksensorvorrichtung zum Ermitteln eines Drucks der Luft verwendet werden. Die beiden Drucksensoren können so angeordnet sein, dass sie demselben Umgebungsdruck ausgesetzt sind. Somit können die Drucksignale der beiden Drucksensoren als redundante Signale aufgefasst werden. Ein Drucksignal kann ein elektrisches Signal sein, das einen erfassten Druck abbildende Daten umfassen kann. Von der Auswerteeinrichtung an der Ausgangsschnittstelle bereitgestellten Daten können beispielsweise von einem Steuergerät des Fahrzeugs empfangen und weiterverarbeitet werden. Der Schaltungsträger, beispielsweise in Form einer Leiterplatte, kann ausgeformt sein, um in einer Elektronikkammer eines Gehäuses angeordnet zu werden. Die Drucksensoren können je eine Signalaufbereitungseinrichtung zum Aufbereiten von erfassten Sensorwerten umfassen und ausgebildet sein, um die Drucksignale als aufbereitete Daten an die Auswerteeinrichtung zu übermitteln. Die Auswerteeinrichtung ist erfindungsgemäß ausgebildet, um die über die Empfangsschnittstellen empfangenen Drucksignale entsprechend eines Übertragungsprotokolls der Ausgangsschnittstelle zu dem Ausgangssignal zusammenzufassen.

Die Eingangsschnittstellen zum Empfangen der Drucksignale können je als Schnittstelle eines separaten Datenbusses ausgeführt sein. Ein solcher Datenbus kann beispielsweise ein serieller Datenbus sein. Durch die Übertragung über voneinander entkoppelte Datenbusse kann gewährleistet werden, dass bei Ausfall eines Datenbusses nur das über diesen Datenbus zu übertragende Drucksignal verloren geht, das weitere Drucksignal jedoch über den weiteren Datenbus übertragen werden kann. Dadurch wird die Ausfallsicherheit erhöht.

Die Auswerteeinrichtung umfasst erfindungsgemäß eine erste Auswerteschaltung, die die erste Eingangsschnittstelle zum Empfangen des ersten Drucksignals und eine Ausgabeschnittstelle zum Ausgeben eines unter Verwendung des ersten Drucksignals bereitgestellten dritten Drucksignals aufweist. Ferner umfasst die Auswerteeinrichtung eine zweite Auswerteschaltung, die die zweite Eingangsschnittstelle zum Empfangen des zweiten Drucksignals, eine dritte Eingangsschnittstelle zum Empfangen des dritten Drucksignals und die Ausgabeschnittstelle zum Ausgeben des unter Verwendung des zweiten Drucksignals und des dritten Drucksignals bereitgestellten Ausgangssignals aufweist.

Beispielsweise können die erste Auswerteschaltung als eine integrierte Auswerteschaltung und die zweite Auswerteschaltung als eine integrierte Mikrocontrollerschaltung ausgeführt sein. Somit kann auf bereits im Zusammenhang mit Luftmassenmessvorrichtungen eingesetzte Bauelemente zurückgegriffen werden.

Die erste Auswerteschaltung und die zweite Auswerteschaltung sind erfindungsgemäß auf gegenüberliegenden Seiten des Schaltungsträgers angeordnet. Dadurch kann die Größe des Schaltungsträgers klein gehalten werden.

Gemäß einer Ausführungsform kann die die erste Auswerteschaltung eine vierte Eingangsschnittstelle zum Empfangen eines von einem Luftmassensensor bereitgestellten Luftmassensignals aufweisen. Auf diese weise kann die Auswerteschaltung für mehrere Auswerteaufgaben eingesetzt werden.

Eine erfindungsgemäße Luftmassenmessvorrichtung für ein Fahrzeug weist die folgenden Merkmale auf:
einen Luftmassensensor zum Bereitstellen eines Luftmassensignals; und die genannte Drucksensorvorrichtung, wobei die Auswerteeinrichtung der Drucksensorvorrichtung eine Eingangsschnittstelle zum Empfangen des Luftmassensignals aufweist.

Somit kann die genannte Drucksensorvorrichtung vorteilhaft als Teil einer Luftmassenmessvorrichtung realisiert werden.

Auch wenn in den Ausführungsformen und Ausführungsbeispielen im Zusammenhang mit der Luftmassenmessvorrichtung von Luft gesprochen wird, kann anstelle von Luft die Masse eines beliebigen Gases oder Gasgemisches gemessen werden. Auch ist die Anwendung im Fahrzeugbereich lediglich beispielhaft gewählt.

Eine solche Luftmassenmessvorrichtung kann einen Luftfeuchtesensor und zusätzlich oder alternativ einen Temperatursensor aufweisen. Die Auswerteeinrichtung kann ausgebildet sein, um ein Luftfeuchtsignal von dem Luftfeuchtesensor und zusätzlich oder alternativ ein Temperatursignal von dem Temperatursensor zu empfangen. Auf diese Weise kann ein Einsatzbereich der Luftmassenmessvorrichtung erhöht werden.

Die Luftmassenmessvorrichtung weist erfindungsgemäß einen Sensorträger auf, an dem der Luftmassensensor angeordnet ist. Ferner kann die Luftmassenmessvorrichtung ein Bodenelement zum Aufnehmen des Sensorträgers und des Schaltungsträgers sowie ein Gehäuse aufweisen. Das Gehäuse weist erfindungsgemäß eine Elektronikkammer, einen Messkanal zum Leiten eines Gases und einen elektrischen Anschluss auf. Dabei kann eine Einheit aus dem Bodenelement, dem Sensorträger und dem Schaltungsträger in der Elektronikkammer angeordnet sein. Der Luftmassensensor ist erfindungsgemäß in den Messkanal eingeführt angeordnet und die Ausgangsschnittstelle ist über elektrische Leitungen mit dem elektrischen Anschluss verbunden. Somit kann die gesamte Elektronik als eine Einheit ausgeführt werden, die von dem Gehäuse aufgenommen und gehalten werden kann. Der elektrische Anschluss der Luftmassenmessvorrichtung kann beispielsweise als ein Stecker ausgeführt sein. Das Gehäuse ist erfindungsgemäß als ein Steckfühlergehäuse ausgeführt. Durch den Messkanal kann das Gas, beispielsweise Luft, dessen Masse zu bestimmen ist, geleitet werden. Auf diese Weise kann die Luftmassenmessvorrichtung als eine kompakte Einheit darstellen.

Ein Luftmassenmesssystem für ein Fahrzeug, das eine in einem Ansaugtrakt eines Verbrennungsmotors des Fahrzeugs angeordnete oder anordenbar ist, kann eine genannte Luftmassenmessvorrichtung aufweisen. Dabei kann die Luftmassenmessvorrichtung über den elektrischen Anschluss mit einem Steuergerät des Fahrzeugs verbunden oder verbindbar sein. Somit eignet sich die genannte Luftmassenmessvorrichtung vorteilhaft zum Einsatz in einem Kraftfahrzeug, beispielsweise einem Personenkraftwagen oder einem Lastkraftwagen.

Ein nicht erfindungsgemäßes Druckmessverfahren für eine Luftmassenmessvorrichtung für ein Fahrzeug umfasst die folgenden Schritte:
Bereitstellen eines ersten Drucksignals, das einen von einem an einem Schaltungsträger angeordneten ersten Drucksensor erfassten Druck repräsentiert;
Bereitstellen eines zweiten Drucksignals, das einen von einem an dem Schaltungsträger angeordneten zweiten Drucksensor erfassten Druck repräsentiert;
Empfangen des ersten Drucksignals über eine erste Eingangsschnittstelle einer an dem Schaltungsträger angeordneten Auswerteeinrichtung;
Empfangen des zweiten Drucksignals über eine zweite Eingangsschnittstelle der Auswerteeinrichtung; und
Ausgeben eines unter Verwendung des ersten Drucksignals und des zweiten Drucksignals bereitgestellten Ausgangssignals an einer Ausgangsschnittstelle der Auswerteeinrichtung.

Die genannten Schritte können vorteilhaft unter Verwendung von Einrichtungen der genannten Drucksensorvorrichtung oder der genanten Luftmassenmessvorrichtung umgesetzt werden.

Die Erfindung wird nachstehend anhand der beigefügten Zeichnungen beispielhaft näher erläutert. Es zeigen:
Fig. 1 eine schematische Darstellung eines Fahrzeugs mit einer Drucksensorvorrichtung;
Fig. 2 eine Darstellung einer Drucksensorvorrichtung;
Fig. 3 eine Darstellung einer Drucksensorvorrichtung für eine Luftmassenmessvorrichtung;
Fig. 4 eine Darstellung einer Drucksensorvorrichtung für eine Luftmassenmessvorrichtung;
Fig. 5 eine Luftmassenmessvorrichtung; und
Fig. 6 ein Ablaufdiagramm eines Druckmessverfahrens.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

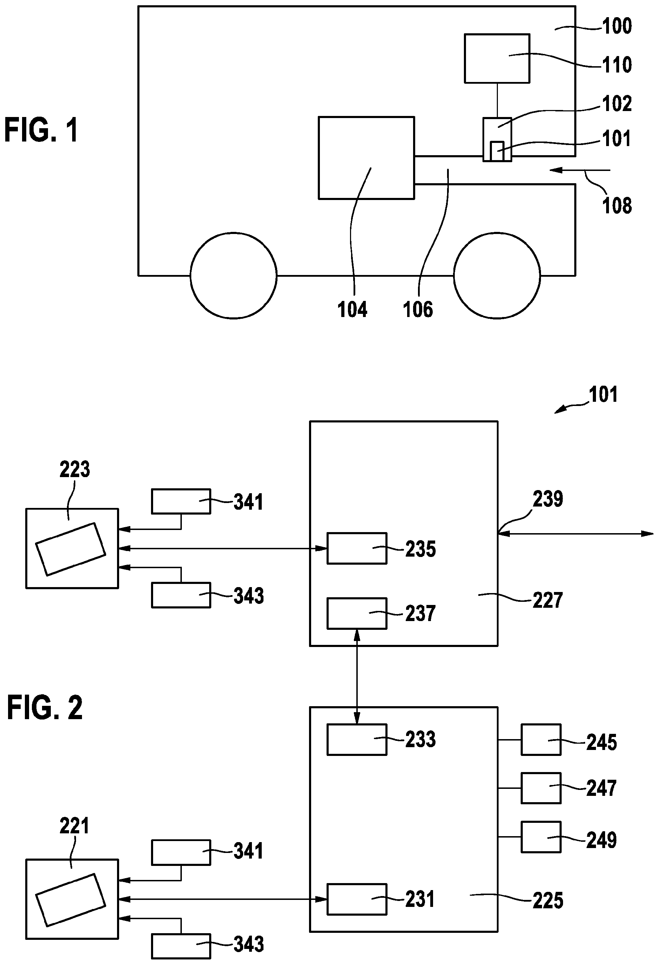

Fig. 1 zeigt eine schematische Darstellung eines Fahrzeugs 100 mit einer Drucksensorvorrichtung 101 gemäß einem Ausführungsbeispiel der vorliegenden Erfindung. Das Fahrzeug 100 weist einen Verbrennungsmotor 104 auf, dem über einen Luftkanal 106 Luft 108 zugeführt wird. Die Drucksensorvorrichtung 101 ist in oder an dem Luftkanal 106 angeordnet und ausgebildet, um einen Druck der Luft 108 zu erfassen und gemäß diesem Ausführungsbeispiel an ein Steuergerät 110 des Fahrzeugs 100 bereitzustellen.

Gemäß unterschiedlicher Ausführungsbeispiele kann die Drucksensorvorrichtung 101 ferner ausgebildet sein, um eine Temperatur, eine Luftmasse und/oder eine Luftfeuchtigkeit der Luft 108 repräsentierende Werte zu erfassen und bereitzustellen, beispielsweise an das Steuergerät 110.

Gemäß einem Ausführungsbeispiel ist die Drucksensorvorrichtung 101 teil einer Luftmassenmessvorrichtung 102. Die Luftmassenmessvorrichtung 102 ist ausgebildet, um eine Masse der Luft 108 oder einen die Masse repräsentierenden Wert zu erfassen. Dazu kann die Luftmassenmessvorrichtung 102 ausgebildet sein, um eine Masse eines durch einen Messkanal der Luftmassenmessvorrichtung 102 strömenden Anteils der Luft 108 zu erfassen.

Fig. 2 zeigt eine schematische Darstellung einer Drucksensorvorrichtung 101 gemäß einem Ausführungsbeispiel der vorliegenden Erfindung. Dabei kann es sich um die in Fig. 1 genannte Drucksensorvorrichtung 101 handeln. Die Drucksensorvorrichtung 101 weist einen ersten Drucksensor 221, einen zweiten Drucksensor 223 und eine Auswerteeinrichtung auf. Gemäß diesem Ausführungsbeispiel weist die Auswerteeinrichtung eine erste Auswerteschaltung 225 und eine zweite Auswerteschaltung 227 auf.

Die erste Auswerteschaltung 225 weist eine Eingangsschnittstelle 231 und eine Ausgangsschnittstelle 233 auf. Der erste Drucksensor 221 ist über die Eingangsschnittstelle 231 mit der ersten Auswerteschaltung 225 verbunden. Die Eingangsschnittstelle 231 ist gemäß diesem Ausführungsbeispiel als eine bidirektionale Schnittstelle ausgeführt. Die erste Auswerteschaltung 225 ist ausgebildet, um über die Eingangsschnittstelle 231 ein erstes Drucksignal zu empfangen. Das erste Drucksignal umfasst von dem ersten Drucksensor 221 erfasste Druckdaten. Die erste Auswerteschaltung 225 ist ausgebildet, um entweder das erste Drucksignal oder ein auf Daten des ersten Drucksignals basierendes Drucksignal über die Ausgangsschnittstelle 233 an die zweite Auswerteschaltung 227 auszugeben.

Die zweite Auswerteschaltung 227 weist eine Eingangsschnittstelle 235, eine weitere Eingangsschnittstelle 237 und eine Ausgangsschnittstelle 239 auf. Der zweite Drucksensor 223 ist über die Eingangsschnittstelle 235 mit der zweiten Auswerteschaltung 227 verbunden. Die Eingangsschnittstelle 235 ist gemäß diesem Ausführungsbeispiel als eine bidirektionale Schnittstelle ausgeführt. Die zweite Auswerteschaltung 227 ist ausgebildet, um über die Eingangsschnittstelle 235 ein zweites Drucksignal zu empfangen. Das zweite Drucksignal umfasst von dem zweiten Drucksensor 223 erfasste Druckdaten. Die zweite Auswerteschaltung 227 ist ausgebildet, um das von der ersten Auswerteschaltung 225 über die Ausgangsschnittstelle 233 ausgegebene Signal, das von dem ersten Drucksensor 221 erfasste Druckdaten umfasst, über die weitere Eingangsschnittstelle 237 zu empfangen. Die zweite Auswerteschaltung 225 ist ferner ausgebildet, um entweder die über die Eingangsschnittstellen 235, 237 empfangene Signale oder ein daraus ermitteltes Ausgangssignal über die Ausgangsschnittstelle 239 auszugeben, beispielsweise an ein Steuergerät, wie es in Fig. 1 gezeigt ist. Die Ausgangsschnittstelle 239 ist gemäß diesem Ausführungsbeispiel als eine bidirektionale Schnittstelle ausgeführt.

Die Drucksensoren 221, 223 weisen je einen Anschluss zum Verbinden der Drucksensoren 221, 223 mit einer Betriebsspannung VSupply 341 auf. Ferner weisen die Drucksensoren 221, 223 je einen Anschluss zum Verbinden der Drucksensoren 221, 223 mit einem Massepotenzial GND 343 auf.

Die Drucksensoren 221, 223 und die Auswerteschaltungen 225, 227 können auf einem gemeinsamen Schaltungsträger angeordnet sein.

Die Schnittstellen 231, 233, 235 können je einem separaten Datenbus zugeordnet sein. Es können somit drei eigenständige Datenbusse zum Verbinden der Drucksensoren 221, 223 mit den Auswerteschaltungen 225, 227 und zum Verbinden der Auswerteschaltungen 225, 227 untereinander eingesetzt werden.

Die Schnittstellen 231, 233, 235, 237, 239 können als digitale Schnittstellen ausgeführt sein.

Gemäß einem alternativen Ausführungsbeispiel kann die Auswerteeinrichtung auch einteilig ausgeführt sein und die Eingangsschnittstelle 231 zum Empfangen des ersten Drucksignals, die Eingangsschnittstelle 235 zum Empfangen des zweiten Drucksignals und die Ausgangsschnittstelle 239 zum Ausgeben eines auf Daten des ersten Drucksignals und des zweiten Drucksignals basierenden Ausgangssignals aufweisen.

Gemäß einem Ausführungsbeispiel weist die Auswerteeinrichtung optional zumindest eine weitere Schnittstelle zum Empfangen eines von einem Luftmassensensor 245 bereitgestellten Luftmassensignals, eines von einem Temperatursensor 247 bereitgestellten Temperatursignals und/oder eines von einem Feuchtesensor 249 bereitgestellten Feuchtesignals auf. Der Feuchtesensor 249 kann eine semi-permeable Membran mit einem "Messkammer" Feuchtesensor und einem Feuchtesensor umfassen.

Beispielsweise kann die erste Auswerteschaltung 225 diese entsprechenden Schnittstellen aufweisen. Entsprechend empfangene Daten können über die Ausgangsschnittstelle 233 oder eine oder mehrere weitere Ausgangsschnittstellen an die zweite Auswerteschaltung 227 übertragen werden.

Gemäß einem Ausführungsbeispiel weist die Drucksensorvorrichtung 101 eine redundante Auslegung interner Bussysteme zur Anbindung der Drucksensoren 221, 223 auf. Dabei kann die Schnittstelle 231 eine Schnittstelle zu einem ersten Bus, die Schnittstellen 233, 237 Schnittstellen zu einem dritten Bus und die Schnittstelle 235 eine Schnittstelle zu einem zweiten Bus darstellen. Die Schnittstelle 239 kann eine Schnittstelle zu einem Steuergerät darstellen. Die Schnittstelle 239 kann wiederum an einen separaten Bus angeschlossen sein.

Die erste Auswerteschaltung 225 kann als ein ASIC, also eine applikationsspezifische integrierte Schaltung einer Luftmassenmessvorrichtung, und die zweite Auswerteschaltung 227 kann als ein Mikrocontroller ausgeführt sein.

Der beschriebene Ansatz bietet ein redundantes Drucksignal. Dabei ist eine flexible, kostengünstige Integration von zwei Drucksensoren 221, 223 auf einer Auswerteschaltung 225, 227 realisiert. Dabei erfolgt die Erfassung und Verarbeitung des Drucksignals jeweils im Drucksensor 221, 223 selbst. Die Anbindung der Drucksensoren 221, 223 an den Schnittstellencontroller (Mikrocontroller) 227 erfolgt dabei über zwei voneinander unabhängige interne Bussysteme. Neben dem Ausfall eines Drucksensors 221, 223 ist damit auch der Ausfall eines internen Busses abgesichert.

Gemäß einem nicht gezeigten Ausführungsbeispiel lässt sich ein redundantes Drucksignal sehr einfach durch die Integration eines zusätzlichen, zweiten Drucksensors 223 auf der Schaltung realisieren. Um die Drucksignale über eine digitale Schnittstelle 239, beispielsweise an das Steuergerät, übermitteln zu können, sind die Drucksensoren 221, 223 über einen gemeinsamen internen Bus (z. B. SPI) mit einem Mikrocontroller verbunden. Dieser holt die aktuellen Druckmesswerte der beiden Sensoren 221, 223 ab und sendet sie über eine digitale Schnittstelle 239 an das Steuergerät. Bei einem solchen Design ist das System redundant gegen den Ausfall eines Drucksensors 221, 223 ausgelegt. Ein Ausfall des internen Bussystems (z. B. SPI) des Mikrocontrollers 227 führt bei einer solchen Sensor-Partitionierung jedoch zum Ausfall beider Drucksensorsignale.

Um dies zu verhindern, erfolgt die Anbindung der Drucksensoren 221, 223, wie in Fig. 2 gezeigt, über getrennte interne Bussysteme. Eine mögliche Ankopplung ist in Fig. 2 gezeigt. Dabei wird ein Drucksensor 221 über einen ersten internen Bus (z. B. SPI) an den Auswerte-IC 225 einer Druckmessvorrichtung 101 oder eines Luftmassensensors verbunden. Der zweite Drucksensor 223 wird direkt an den Mikrocontroller 227 über einen zweiten internen Bus (z. B. SPI) angeschlossen.

Gemäß einem Ausführungsbeispiel kommunizieren die als Mikrocontroller ausgeführte zweite Auswerteschaltung 227 und die als ASIC ausgeführte erste Auswerteschaltung 225 über einen weiteren, dritten internen Bus (z. B. I2C). Über diesen Bus werden die Daten des ersten Drucksensors 221 an den Mikrocontroller 227 übermittelt. Alle drei Bussysteme arbeiten unabhängig voneinander. Dadurch ist die redundante Auslegung des Drucksignals auch bei Ausfall eines internen Bussystems weiterhin gegeben. Durch die Ankopplung an den ASIC 225 lässt sich die redundante Auslegung des Drucksignals auch bezüglich eines Ausfalls eines internen Bussystems kostengünstig, ohne die Einbindung eines weiteren Mikrocontrollers lösen. Für das Ausführungsbeispiel eines Luftmassesensors entstehen keine zusätzlichen Kosten, da der ASIC 225 zur Ermittlung der Luftmasse bereits auf bekannten Schaltungen integriert ist. Zudem besitzt ein bekannter ASIC die Möglichkeit, einen Drucksensor-Satelliten anzubinden.

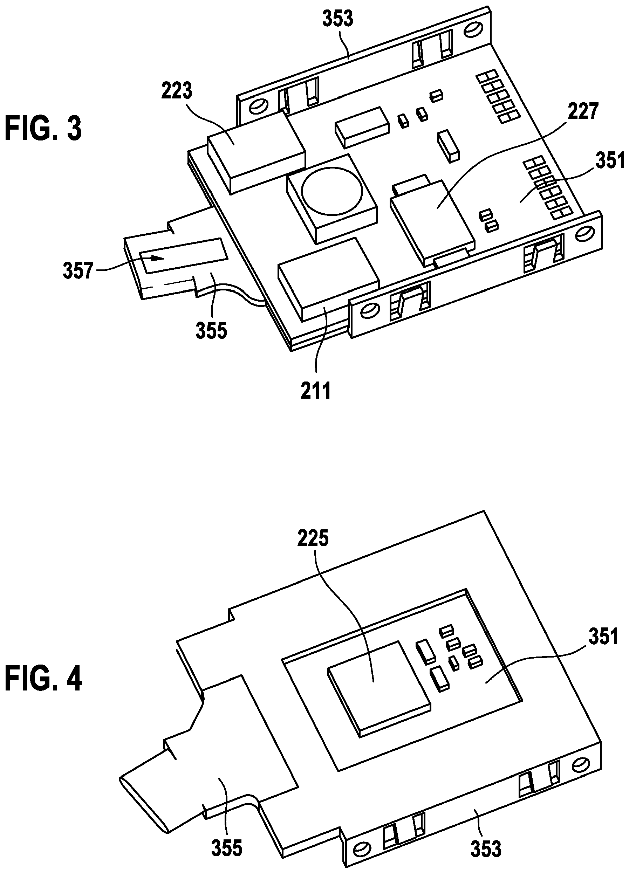

Fig. 3 zeigt eine Darstellung einer Drucksensorvorrichtung für eine Luftmassenmessvorrichtung gemäß einem Ausführungsbeispiel der vorliegenden Erfindung. Dabei kann es sich um eine Drucksensorvorrichtung handeln, wie sie anhand von Fig. 2 beschrieben ist.

Die Drucksensorvorrichtung weist einen ersten Drucksensor 221, einen zweiten Drucksensor 223, eine in Fig. 3 nicht gezeigte erste Auswerteschaltung und eine zweite Auswerteschaltung 227 in Form eines Mikrocontrollers auf. Der erste Drucksensor 221, der zweite Drucksensor 223 und die Auswerteschaltung 227 sind auf einer Seite eines Schaltungsträgers 351 angeordnet. Die erste Auswerteschaltung kann beispielsweise auf einer gegenüberliegenden Seite des Schaltungsträgers 351 angeordnet sein. Signale zwischen den Drucksensoren 221, 223 sowie den Auswerteschaltungen 227 können über Leiterbahnen des Schaltungsträgers 351 übertragen werden.

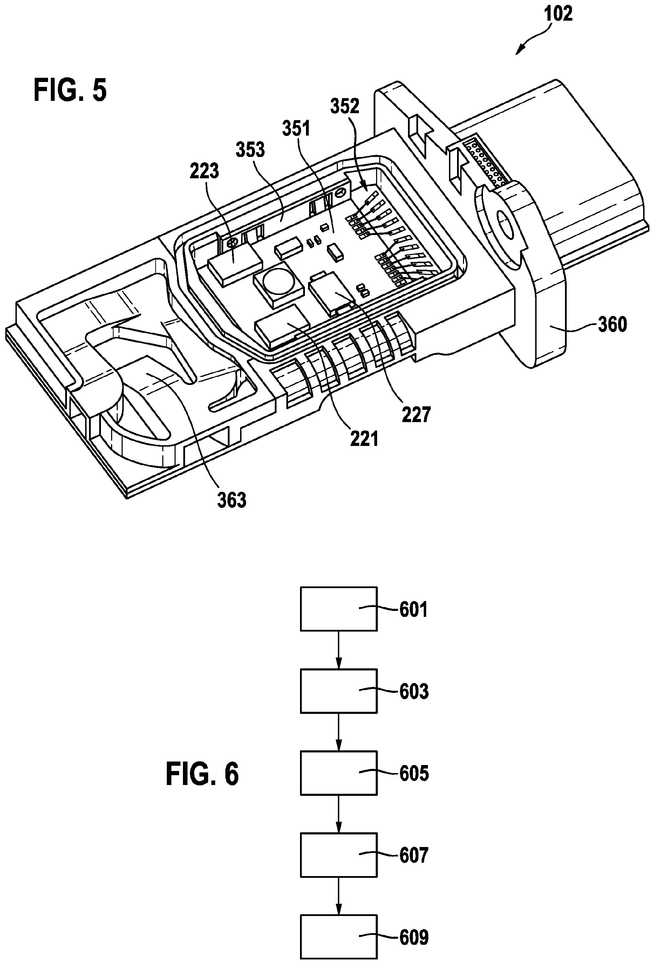

Der Schaltungsträger 351 ist von einem Bodenblech 353 aufgenommen. Eine den Sensoren 221, 223 und der zweiten Auswerteschaltung 227 abgewandte Seite des Schaltungsträgers 351 liegt auf einem Boden des Bodenblechs 353 auf. Das Bodenblech 353 weist zwei gegenüberliegende Wandbereiche auf, die rechtwinklig zu dem Boden des Bodenblechs 353 angeordnet sind und entlang zweier gegenüberliegender Ränder des Schaltungsträgers 351 geführt sind. Die Wandbereiche des Bodenblechs 353 weisen Befestigungsmittel, beispielsweise Durchgangslöcher und/oder Rasthaken, zum Befestigen des Bodenblechs 353 an einem Gehäuse auf, wie es beispielsweise in Fig. 5 gezeigt ist.

Ein Sensorträger 355 ragt über ein freies Ende des Schaltungsträgers 351 hinaus, das von keinem Wandbereich des Bodenblechs 353 abgeschirmt ist. Der Sensorträger 335 ist in etwa mittig zu dem freien Ende des Schaltungsträgers 351 angeordnet. Der Sensorträger 355 ist in etwa halb so breit wie der Schaltungsträger 351. Hauptoberflächen des Sensorträgers 355 und des Schaltungsträgers 351sind im Wesentlichen parallel zueinander ausgerichtet. Der Sensorträger 355 weist einen Aufnahmebereich 357 für einen Luftmassensensor 357 auf. Ein solcher Luftmassensensor kann über geeignete Leitungen mit elektrischen Kontakten des Schaltungsträgers 351 verbunden sein.

Neben den genannten Elementen kann beispielsweise ein Feuchtesensor zum Erfassen einer Feuchtigkeit an dem Schaltungsträger 351 angeordnet sein. Ferner kann ein Temperatursensor mit dem Schaltungsträger 351 verbunden sein. Ferner kann der Schaltungsträger 351 weitere elektronische Bauelemente, wie beispielsweise Widerstände umfassen.

Fig. 4 zeigt eine Darstellung einer Drucksensorvorrichtung für eine Luftmassenmessvorrichtung gemäß einem Ausführungsbeispiel der vorliegenden Erfindung. Dabei kann es sich um die in Fig. 3 gezeigte Drucksensorvorrichtung handeln, die in Fig. 4 von der Rückseite her gezeigt ist.

Gezeigt sind die Rückseiten des Schaltungsträgers 351, des Sensorträgers 355 und des Bodenblechs 353, wie sie bereits anhand von Fig. 3 beschrieben sind. Auf der Rückseite des Schaltungsträgers 351 ist die erste Auswerteschaltung 225 angeordnet. Dazu weist das Bodenblech 353 eine Aussparung für den Bereich des Schaltungsträgers 351 auf, in dem die Auswerteschaltung 225 angeordnet ist. Die erste Auswerteschaltung 225 kann als ein sogenannter ASIC ausgeführt sein.

Gemäß einem Ausführungsbeispiel zeigen die Figuren 3 und 4 einen Aufbau eines Elektronikmoduls, das der bestückte Schaltungsträger 351, den bestückten Sensorträger 355 und das der Schaltungsträger 351 und den Sensorträger 355 verbindende Bodenblech 353 umfasst. Das Elektronikmodul kann in einen Elektronikraum eines dafür vorgesehenen Gehäuses eingesetzt werden.

Fig. 5 zeigt eine Luftmassenmessvorrichtung 102 gemäß einem Ausführungsbeispiel der vorliegenden Erfindung. Die Luftmassenmessvorrichtung 102 ist als ein Steckfühler ausgeführt. Die Luftmassenmessvorrichtung 102 stellt einen Luftmassensensor mit einem redundanten Drucksensor 221, 223 und einer digitaler Schnittstelle, beispielsweise zu einem Steuergerät, dar.

Die Luftmassenmessvorrichtung 102 weist ein Gehäuse 360 mit einer Elektronikkammer und einem Messkanalabschnitt 363 auf. Die Elektronikkammer ist ausgeformt um ein Elektronikmodul aufzunehmen, wie es in Fig. 5 gezeigt ist. Das Elektronikmodul kann dabei aus dem Bodenblech 353, dem Sensorträger aus Kunststoff und dem Schaltungsträger 351 bestehen.

Angrenzend an die Elektronikkammer ist der Messkanalabschnitt 363 angeordnet. Ein Messkanal 363 wird durch den Messkanalabschnitt 363 des Gehäuses 360 und durch ein Gehäuseteil ausgeformt, das als ein Messkanal-(Bypass-) Deckel auf den Messkanalabschnitt 363 des Gehäuses 240 aufgesetzt wird. Der Messkanal weist eine Mehrzahl von Biegungen zum Führen eines Gases durch das Gehäuse 360 der Luftmassenmessvorrichtung 102 auf. Wenn das Elektronikmodul in der Elektronikkammer angeordnet ist, ragt der Sensorträger in den Messkanal hinein. Auf diese Weise kann der an dem Sensorträger 220 angeordnete Luftmassensensor in direktem Kontakt mit durch den Messkanal geleitetem Gas, beispielsweise Luft, stehen.

Die Elektronikkammer kann durch einen weiteren Deckel abgedeckt werden. Dabei kann es sich um einen Elektronikraumdeckel handeln.

Auf einer dem Messkanalabschnitt 363 gegenüberliegenden Seite der Elektronikkammer ist von dem Gehäuse 260 ein Steckerabschnitt als Steckfühler-Anschluss der Luftmassenmessvorrichtung 102 ausgeformt.

Das Gehäuse 360 weist einen Leiterkamm mit einer Mehrzahl von elektrischen Leiterbahnen auf. Über den Leiterkamm 352 kann der Schaltungsträger 351 mit einem an dem Gehäuse 360 angeordneten elektrischen Anschluss der Luftmassenmessvorrichtung 102 verbunden werden.

Gemäß diesem Ausführungsbeispiel weist die Luftmassenmessvorrichtung 102 einen weiteren Sensor in Form eines Temperaturfühlers auf. Der Temperaturfühler kann beispielsweise benachbart zu dem Schaltungsträger 351 angeordnet werden. Anschlüsse des Temperaturfühlers können über den Leiterkamm kontaktiert werden.

Bei dem Luftmassensensor 102 (Integrated Pressure- and Humidity Sensor) werden neben Luftmasse und Ansauglufttemperatur weitere Messgrößen wie Druck, relative Feuchte und Temperatur am Feuchtesensor ermittelt. Die einzelnen Sensoren 221, 223 für Druck sowie die einzelnen Sensoren für Luftmasse, Feuchte und Temperatur arbeiten unabhängig voneinander. Die jeweiligen Messgrößen werden können über eine gemeinsame Leitung oder mehrere separate Leitungen an ein Steuergerät übermittelt werden. Dazu kann der Luftmassensensor 102 beispielsweise einen 3-poligen oder einen 8-poligen Stecker aufweisen.

Das Gehäuse 630 des Luftmassensensors 102 kann zwei Elektronikkammern auf Vor- und Rückseite des Schaltungsträgers 351 aufweisen. Die beiden Elektronikkammern können ohne fluidische Verbindung ausgeführt sein.
Für die Montage der Bauelemente auf die Vorderseite und Rückseite des Schaltungsträgers 351 können unterschiedliche Fertigungslinien eingesetzt werden.

Der Luftmassensensor kann beispielsweise als ein mikromechanischer Sensor ausgeführt sein.

Gemäß einem Ausführungsbeispiel weist die Luftmassenmessvorrichtung 102 eine LIN-Schnittstelle auf und besitzt eine Elektronikkammer. Die Elektronikkammer dient der Aufnahme des Elektronikmoduls, wie es in Fig. 5 gezeigt ist. Das Elektronikmodul besteht aus dem Bodenblech 353 mit angespritztem Sensorträger 355, wie es in Fig. 5 gezeigt ist. Der Sensorträger 355 dient der Aufnahme des Luftmassensensors. Auf dem Bodenblech 353 wird der bestückte Schaltungsträger 351 montiert. Die Verbindung des Schaltungsträgers 351 mit dem Luftmassensensor erfolgt mittels Dünndrahtbonds. Alle elektrischen Bauelemente 221, 223, 225, 227, mit Ausnahme des Temperaturfühlers, werden durch einen Standard-SMD Prozess auf dem Schaltungsträger 351 bestückt und gelötet. Die Bestückung erfolgt im Nutzen, d.h. auf mehreren Schaltungsträgern 351 gleichzeitig. Durch den SMD-Bestückungsprozess können relativ einfach und kostengünstig Varianten, z. B. mit zusätzlichem, reduntantem Drucksensor 221, 223 und/oder Feuchtesensor, dargestellt werden.

Drucksensoren 221, 223 und Feuchtesensoren arbeiten als unabhängige Sensoren auf dem Schaltungsträger 351. Dies bedeutet, dass Messung und Signalaufbereitung in den jeweiligen Sensoren 221, 223 selbst erfolgen.

Der Temperaturfühler ist über den Leiterkamm und Dickdrahbondverbindungen zwischen Leiterkamm und Schaltungsträger 351 an den Mikrocontroller 225 angebunden.

Durch die Nutzung einer digitalen Schnittstelle können mehrere Sensorsignale über eine Signalleitung zum Steuergerät gesendet werden. Hierzu werden die zusätzlichen Sensoren (Druck, ASIC mit angeschlossenem Drucksensor, Temperatur, Feuchte) als Satelliten an den Mikrocontroller 227 angebunden. Dieser sammelt die Messdaten, bereitet sie auf und schickt sie über eine digitale Schnittstelle an das Steuergerät.

Fig. 6 zeigt ein Ablaufdiagramm eines Druckmessverfahrens. Die Schritte des Verfahrens können beispielsweise im Zusammenhang mit Einrichtungen einer in den vorangegangenen Figuren dargestellten Vorrichtung ausgeführt werden.

Das Verfahren umfasst einen Schritt 601 in dem ein erstes Drucksignal bereitgestellt wird und einen Schritt 603, in dem ein zweites Drucksignal bereitgestellt wird. Die Drucksignale können beispielsweise von zwei räumlich getrennt voneinander angeordneten Drucksensoren bereitgestellt werden, wie sie beispielsweise in Fig. 2 gezeigt sind.

In einem Schritt 605 wird das erste Drucksignal über eine erste Eingangsschnittstelle und in einem Schritt 607 das zweite Drucksignal über eine zweite Eingangsschnittstelle einer Auswerteeinrichtung empfangen.

In einem Schritt 609 wird basierend auf dem ersten Drucksignal und dem zweiten Drucksignal ein Ausgangssignal generiert und an einer Ausgangsschnittstelle ausgegeben.

In einem optionalen Schritt kann von der Auswerteeinrichtung ferner ein Luftmassensignal eines Luftmassensensors empfangen werden. Daten des Luftmassensignals können über eine separate Ausgangsschnittstelle oder zusammen mit Daten der Drucksignale über die bereits genannte Ausgangsschnittstelle ausgegeben werden.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Luftmassenmessvorrichtung (102) für ein Fahrzeug (100), mit folgenden Merkmalen:
einer Drucksensorvorrichtung (101) mit einem Schaltungsträger (351), einem ersten Drucksensor (221), der an dem Schaltungsträger (351) angeordnet ist und ausgebildet ist, um einen Druck zu erfassen und ein den Druck repräsentierendes erstes Drucksignal bereitzustellen,
einem zweiten Drucksensor (223), der an dem Schaltungsträger (351) angeordnet ist und ausgebildet ist, um den Druck zu erfassen und ein den Druck repräsentierendes zweites Drucksignal bereitzustellen, und einer Auswerteeinrichtung (225, 227), die eine erste Eingangsschnittstelle (231) zum Empfangen des ersten Drucksignals, eine zweite Eingangsschnittstelle (235) zum Empfangen des zweiten Drucksignals und eine Ausgangsschnittstelle (239) zum Ausgeben eines unter Verwendung des ersten Drucksignals und des zweiten Drucksignals bereitgestellten Ausgangssignals aufweist;
einem Luftmassensensor (245) zum Bereitstellen eines Luftmassensignals, wobei die Auswerteeinrichtung (225, 227) der Drucksensorvorrichtung (101) ferner eine Eingangsschnittstelle zum Empfangen des Luftmassensignals aufweist; und
einem Sensorträger (355) an dem der Luftmassensensor (357) angeordnet ist sowie einem als Steckfühlergehäuse ausgeformten Gehäuse (360), das eine Elektronikkammer, einen Messkanal zum Leiten eines Gases und einen elektrischen Anschluss aufweist, wobei der Luftmassensensor (357) in den Messkanal eingeführt angeordnet ist und die Ausgangsschnittstelle (239) über elektrische Leitungen mit dem elektrischen Anschluss verbunden ist,
**dadurch gekennzeichnet, dass**
die Auswerteeinrichtung (225, 227) an dem Schaltungsträger (351) angeordnet ist, eine Einheit aus dem Sensorträger (355) und dem Schaltungsträger (351) in der Elektronikkammer angeordnet ist, und die Auswerteeinrichtung ausgebildet ist, um die über die Eingangsschnittstellen (231, 235) empfangenen Drucksignale entsprechend eines Übertragungsprotokolls der Ausgangsschnittstelle (239) zu dem Ausgangssignal zusammenzufassen, wobei die Auswerteeinrichtung eine erste Auswerteschaltung (225) mit der ersten Eingangsschnittstelle (231) zum Empfangen des ersten Drucksignals und einer Ausgabeschnittstelle (233) zum Ausgeben eines unter Verwendung des ersten Drucksignals bereitgestellten dritten Drucksignals umfasst, und eine zweite Auswerteschaltung (227) mit der zweiten Eingangsschnittstelle (235) zum Empfangen des zweiten Drucksignals, einer dritten Eingangsschnittstelle (237) zum Empfangen des dritten Drucksignals und der Ausgabeschnittstelle (239) zum Ausgeben des unter Verwendung des zweiten Drucksignals und des dritten Drucksignals bereitgestellten Ausgangssignals umfasst, und bei der die erste Auswerteschaltung (225) und die zweite Auswerteschaltung (227) auf gegenüberliegenden Seiten des Schaltungsträger (351) angeordnet sind.

2. Luftmassenmessvorrichtung (102) gemäß Anspruch 1, bei der die Eingangsschnittstellen (231, 235) zum Empfangen der Drucksignale je als Schnittstelle eines separaten Datenbus ausgeführt sind.

3. Luftmassenmessvorrichtung (102) gemäß einem der vorangegangenen Ansprüche, bei der die erste Auswerteschaltung (225) als eine integrierte Auswerteschaltung und die zweite Auswerteschaltung (227) als eine integrierte Mikrocontrollerschaltung ausgeführt sind.

4. Luftmassenmessvorrichtung (102) gemäß einem der einem der vorangegangenen Ansprüche, bei der die erste Auswerteschaltung (225) eine vierte Eingangsschnittstelle zum Empfangen eines von einem Luftmassensensor (245) bereitgestellten Luftmassensignals aufweist.

5. Luftmassenmessvorrichtung (102) gemäß einem der vorangegangenen Ansprüche, mit einem Luftfeuchtesensor (249) und/oder einem Temperatursensor (247), wobei die Auswerteeinrichtung (225, 227) ausgebildet ist, um ein Luftfeuchtesignal von dem Luftfeuchtesensor (249) und/oder ein Temperatursignal von dem Temperatursensor (247) zu empfangen.

6. Luftmassenmessvorrichtung (102) gemäß einem der vorangegangenen Ansprüche, mit einem Bodenelement (353) zum Aufnehmen des Sensorträgers (355) und des Schaltungsträgers (351) wobei die Einheit aus dem Bodenelement (353), dem Sensorträger (355) und des Schaltungsträgers (351) in der Elektronikkammer angeordnet ist.

7. Luftmassenmesssystem für ein Fahrzeug (100), das eine in einem Ansaugtrakt (106) eines Verbrennungsmotors (104) des Fahrzeugs (100) angeordnete oder anordenbare Luftmassenmessvorrichtung (102) gemäß einem der vorangegangenen Ansprüche aufweist, wobei die Luftmassenmessvorrichtung (102) über den elektrischen Anschluss mit einem Steuergerät (110) des Fahrzeugs (100) verbunden oder verbindbar ist.

## Claims

1. Air mass measuring apparatus (102) for a vehicle (100), having the following features:
a pressure sensor apparatus (101) having a circuit carrier (351),
a first pressure sensor (221) which is arranged on the circuit carrier (351) and is designed to capture a pressure and to provide a first pressure signal representing the pressure,
a second pressure sensor (223) which is arranged on the circuit carrier (351) and is designed to capture the pressure and to provide a second pressure signal representing the pressure, and
an evaluation device (225, 227) which has a first input interface (231) for receiving the first pressure signal, a second input interface (235) for receiving the second pressure signal and an output interface (239) for outputting an output signal provided using the first pressure signal and the second pressure signal;
an air mass sensor (245) for providing an air mass signal, wherein the evaluation device (225, 227) of the pressure sensor apparatus (101) also has an input interface for receiving the air mass signal; and
a sensor carrier (355) on which the air mass sensor (357) is arranged and a housing (360) which is in the form of a plug-in sensor housing and has an electronics chamber, a measuring channel for conducting a gas and an electrical connection,
wherein the air mass sensor (357) is arranged in a manner inserted into the measuring channel, and the output interface (239) is connected to the electrical connection via electrical lines,
**characterized in that**
the evaluation device (225, 227) is arranged on the circuit carrier (351), a unit comprising the sensor carrier (355) and the circuit carrier (351) is arranged in the electronics chamber, and the evaluation device is designed to combine the pressure signals received via the input interfaces (231, 235) in accordance with a transmission protocol of the output interface (239) to form the output signal, wherein the evaluation device comprises a first evaluation circuit (225) with the first input interface (231) for receiving the first pressure signal and with an output interface (233) for outputting a third pressure signal provided using the first pressure signal, and a second evaluation circuit (227) with the second input interface (235) for receiving the second pressure signal, with a third input interface (237) for receiving the third pressure signal and with the output interface (239) for outputting the output signal provided using the second pressure signal and the third pressure signal, and in which the first evaluation circuit (225) and the second evaluation circuit (227) are arranged on opposite sides of the circuit carrier (351).

2. Air mass measuring apparatus (102) according to Claim 1, in which the input interfaces (231, 235) for receiving the pressure signals are each in the form of an interface of a separate data bus.

3. Air mass measuring apparatus (102) according to one of the preceding claims, in which the first evaluation circuit (225) is in the form of an integrated evaluation circuit and the second evaluation circuit (227) is in the form of an integrated microcontroller circuit.

4. Air mass measuring apparatus (102) according to one of the preceding claims, in which the first evaluation circuit (225) has a fourth input interface for receiving an air mass signal provided by an air mass sensor (245).

5. Air mass measuring apparatus (102) according to one of the preceding claims, having a humidity sensor (249) and/or a temperature sensor (247), wherein the evaluation device (225, 227) is designed to receive a humidity signal from the humidity sensor (249) and/or a temperature signal from the temperature sensor (247).

6. Air mass measuring apparatus (102) according to one of the preceding claims, having a base element (353) for accommodating the sensor carrier (355) and the circuit carrier (351), wherein the unit comprising the base element (353), the sensor carrier (355) and the circuit carrier (351) is arranged in the electronics chamber.

7. Air mass measuring system for a vehicle (100) which has an air mass measuring apparatus (102) according to one of the preceding claims which is arranged or can be arranged in an intake tract (106) of an internal combustion engine (104) of the vehicle (100), wherein the air mass measuring apparatus (102) is connected or can be connected to a control unit (110) of the vehicle (100) via the electrical connection.

## Revendications

1. Dispositif de mesure de masses d'air (102) destiné à un véhicule (100), présentant les éléments suivants :
un dispositif capteur de pression (101) comportant un support de circuit (351),
un premier capteur de pression (221), qui est agencé sur le support de circuit (351) et qui est conçu pour détecter une pression et fournir un premier signal de pression représentant la pression,
un deuxième capteur de pression (223), qui est agencé sur le support de circuit (351) et qui est conçu pour détecter la pression et fournir un deuxième signal de pression représentant la pression, et un dispositif (225, 227) d'évaluation, qui comporte une première interface d'entrée (231) servant à la réception du premier signal de pression, une deuxième interface d'entrée (235) servant à la réception du deuxième signal de pression, et une interface de sortie (239) servant à l'émission d'un signal de sortie fourni au moyen du premier signal de pression et du deuxième signal de pression ;
un capteur de masses d'air (245) servant à fournir un signal de masses d'air, dans lequel le dispositif d'évaluation (225, 227) du dispositif de détection de pression (101) comprend en outre une interface d'entrée servant à la réception du signal de masses d'air ; et un support de capteur (355) sur lequel est agencé le capteur de masses d'air (357), ainsi qu'un boîtier (360) réalisé sous la forme d'un boîtier de capteur enfichable, lequel boîtier comporte une chambre électronique, un canal de mesure servant à l'acheminement d'un gaz et une borne électrique, dans lequel le capteur de masses d'air (357) est inséré dans le canal de mesure et l'interface de sortie (239) est reliée à la borne électrique par l'intermédiaire de lignes électriques,
**caractérisé en ce que**
le dispositif d'évaluation (225, 227) est agencé sur le support de circuit (351), une unité constituée du support de capteur (355) et du support de circuit (351) est disposée dans la chambre électronique, et le dispositif d'évaluation est conçu pour combiner les signaux de pression reçus par l'intermédiaire des interfaces d'entrée (231, 235) en le signal de sortie conformément à un protocole de transmission de l'interface de sortie (239), dans lequel le dispositif d'évaluation comprend un premier circuit d'évaluation (225) comportant la première interface d'entrée (231) servant à la réception du premier signal de pression et une interface de sortie (233) servant à l'émission d'un troisième signal de pression produit par utilisation du premier signal de pression, et un deuxième circuit d'évaluation (227) comportant la deuxième interface d'entrée (235) servant à la réception du deuxième signal de pression, une troisième interface d'entrée (237) servant à la réception du troisième signal de pression et l'interface de sortie (239) servant à l'émission du signal de sortie produit par utilisation du deuxième signal de pression et du troisième signal de pression, et dans lequel le premier circuit d'évaluation (225) et le deuxième circuit d'évaluation (227) sont agencés sur des côtés opposés du support de circuit (351).

2. Dispositif de mesure de masses d'air (102) selon la revendication 1, dans lequel les interfaces d'entrée (231, 235) servant à la réception des signaux de pression sont chacune réalisées sous la forme d'interfaces d'un bus de données séparé.

3. Dispositif de mesure de masses d'air (102) selon l'une des revendications précédentes, dans lequel le premier circuit d'évaluation (225) est réalisé sous la forme d'un circuit intégré et le deuxième circuit d'évaluation (227) est réalisé sous la forme d'un circuit à microcontrôleur intégré.

4. Dispositif de mesure de masses d'air (102) selon l'une des revendications précédentes, dans lequel le premier circuit d'évaluation (225) comporte une quatrième interface d'entrée servant à la réception d'un signal de masses d'air fourni par un capteur de masses d'air (245).

5. Dispositif de mesure de masses d'air (102) selon l'une des revendications précédentes, comprenant un capteur d'humidité (249) et/ou un capteur de température (247), dans lequel le dispositif d'évaluation (225, 227) est conçu pour recevoir un signal d'humidité du capteur d'humidité (249) et/ou un signal de température du capteur de température (247).

6. Dispositif de mesure de masses d'air (102) selon l'une des revendications précédentes, comportant un élément de fond (353) servant au logement du support de capteur (355) et du support de circuit (351), dans lequel l'unité constituée de l'élément de de fond (353), du support de capteur (355) et du support de circuit (351) est agencée dans la chambre électronique.

7. Système de mesure de masses d'air destiné à un véhicule (100), présentant un dispositif de mesure de masses d'air (102) selon l'une des revendications précédentes, qui est agencé ou peut être agencé dans un conduit d'admission (106) d'un moteur à combustion interne (104) du véhicule (100), dans lequel le dispositif de mesure de masses d'air (102) est relié ou peut être relié par l'intermédiaire de la borne électrique à un appareil de commande (110) du véhicule (100).
